# EUROPÄISCHE PATENTANMELDUNG

(11) **EP 1 950 420 A2**
(43) Veröffentlichungstag der Anmeldung: **30.07.2008**
(21) Anmeldenummer: 07022483.7
(22) Anmeldetag: 20.11.2007
(51) Int. Cl.: F04D 29/02, F04D 29/42

(54) **Pumpengehäuse aus Glasfaser-Spritzguss**

(30) Priorität: 23.01.2007 DE 102007003413
(71) Anmelder: WILO AG, 44263 Dortmund (DE)
(72) Erfinder: Sura, Hendrik, 44229 Dortmund (DE)
(74) Vertreter: COHAUSZ DAWIDOWICZ HANNIG & SOZIEN

(57) **Zusammenfassung**

Pumpengehäuse aus Glasfaser-Spritzguss mit einem jeweils einen inneren Durchflusskanal bildenden Saug- und Druckstutzen, wobei die Innenwand des Saug- und/oder des Druckstutzenkanals eine Materialverdickung insbesondere in Form einer Materialauftragung aufweist, die in das Innere des Kanals hineinreicht.

## Beschreibung

Die Erfindung betrifft ein Pumpengehäuse aus Glasfaser-Spritzguss mit einem jeweils einen inneren Durchflusskanal bildenden Saug- und Druckstutzen.

Es ist bekannt ein Pumpengehäuse durch Spritzgießen aus Kunststoff herzustellen und hierbei die Kunststoffmasse beim Einspritzen durch ein Fließhindernis in zwei Ströme zu trennen, deren Fließfronten im Hohlraum des Werkzeugs aufeinander treffen, um dort eine Bindenaht zu bilden. Diese Bindenaht bildet im Kunststoffmaterial des Gehäuses eine Schwachstelle, an der das Material einreißen kann. Dies insbesondere dann, wenn die Bindenaht in hoch beanspruchten Bereichen wie dem Saug- und Druckstutzen liegt.

Aufgabe der Erfindung ist es, die Form des Pumpengehäuses so zu verändern, dass im Bereich der Bindenaht ein Brechen oder Reißen der Wandung sicher verhindert ist.

Diese Aufgabe wird erfindungsgemäß dadurch gelöst, dass die Innenwand des Saug- und/oder des Druckstutzenkanals eine Materialverdickung insbesondere in Form einer Materialauftragung aufweist, die in das Innere des Kanals hineinreicht.

Die in das Stutzeninnere hineinreichende Materialverdickung führt auf Grund des zusätzlichen Materials zu einer Verbesserung der Spannungsverhältnisse im Bereich der Bindenaht, so dass ein Brechen oder Reißen an dieser Stelle sicher verhindert wird.

Besonders vorteilhaft ist hierbei, wenn die Materialverdickung die konvex gewölbte Innenwandform insbesondere die Kreisform des Innenquerschnitts des Kanals unterbricht und eine ebene oder konkave Innenfläche bildet. Hierbei sollte die Innenfläche parallel zur seitlichen Flanschfläche sein, an der der Elektromotor befestigbar ist.

Besonders günstige Spannungsverhältnisse werden erreicht, wenn die Materialverdickung im wesentlichen über die Länge des Kanals verläuft. Auch sollte die Materialverdickung an der Stelle angeordnet sein, an der sich die Bindenaht zweier sich treffender Spritzgussfließfronten befindet.

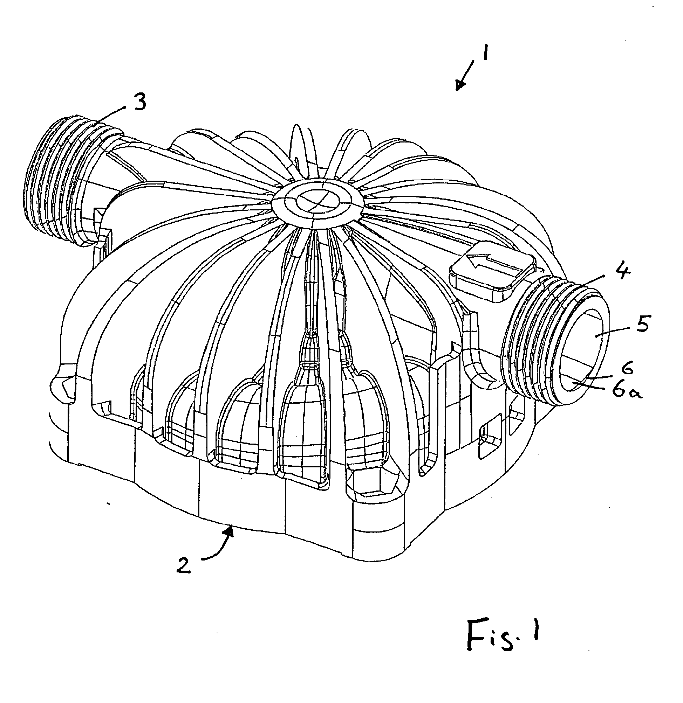

Ein Ausführungsbeispiel der Erfindung ist in den Zeichnungen dargestellt und wird im Folgenden näher beschrieben. Es zeigen
- Fig. 1: eine perspektivische Ansicht des Pumpengehäuses und

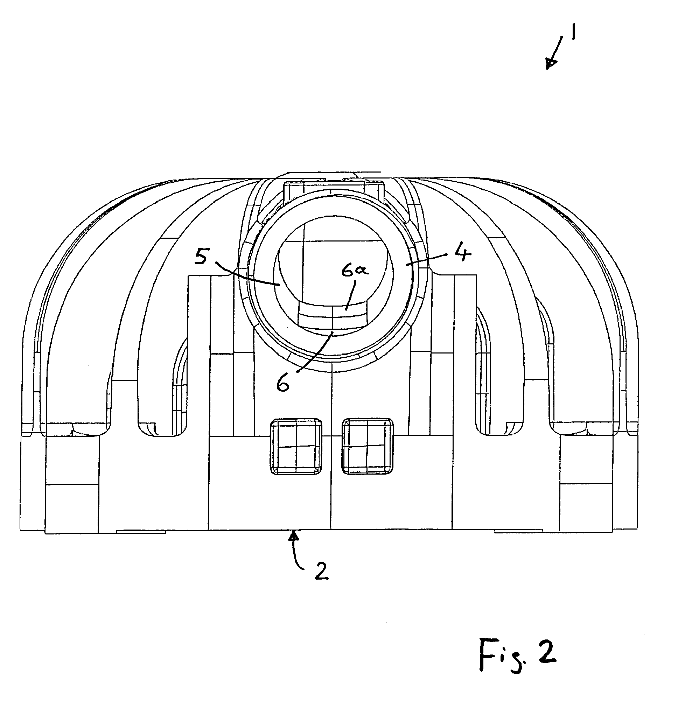

- Fig. 2: eine Seitenansicht des Pumpengehäuses.

Das im Kunststoff-Glasfaser-Spritzgussverfahren hergestellte Gehäuse 1 einer Kreiselpumpe weist eine das Laufrad aufnehmende Pumpenkammer auf mit einer ebenen Anschlussfläche 2, mit der es an einer Fläche eines Elektromotors anschraubbar ist. Die Pumpenkammer ist mit einem Saug- und einem Druckkanal verbunden, die in einem Saug- 3 und einem Druckstutzen 4 enden, die miteinander fluchten.

Das zum Herstellen des Pumpengehäuses 1 verwendete Spritzgusswerkzeug ist derart gestaltet, dass die mit Glasfasern versehene Kunststoffmasse durch ein Fließhindernis in zwei gleich große Kunststoffströme geteilt ist, wobei deren Fließfronten im Hohlraum des Werkzeugs im Bereich der beiden Stutzen 3, 4 aufeinander treffen. Hierdurch entsteht in beiden Stutzenwänden jeweils eine Bindenaht, die die Stutzen jeweils in zwei gleich große Hälften teilt und rechtwinklig zur Anschlussfläche 2 steht.

Die zylindrische Innenwand 5 des Saug- und Druckstutzenkanals weist in dem Bereich der Stutzenkanalwand, die der Außenfläche nahe ist, eine in den Kanal hineinreichende und damit den Kanal an dieser Stelle verengende Materialverdickung 6 bzw. Materialauftragung auf, die die Kanalwand an dieser Stelle in ihrer Dicke vergrößert. Hierbei verläuft die Materialverdickung 6 innen über die Länge des jeweiligen Stutzens 3, 4, wobei die Bindenaht längs und mittig durch die Materialverdickung verläuft.

Die die Kanalwand des Stutzens bildende Fläche 6a der Materialverdickung 6 läuft damit parallel zur Anschlussfläche 2 und ist eben oder konkav geformt. Im letzteren Fall ist der Radius der konkaven Fläche 6a größer als der Radius des Stutzenkanals im übrigen Wandbereich.

## Patentansprüche

1. Pumpengehäuse (1) aus Glasfaser-Spritzguss mit einem jeweils einen inneren Durchflusskanal bildenden Saug- und Druckstutzen (3, 4), **dadurch gekennzeichnet, dass** die Innenwand (5) des Saug- und/oder des Druckstutzenkanals eine Materialverdickung (6) insbesondere in Form einer Materialauftragung aufweist, die in das Innere des Kanals hineinreicht.

2. Pumpengehäuse nach Anspruch 1,**dadurch gekennzeichnet, dass** die Materialverdickung (6) die konvex gewölbte Innenwandform insbesondere die Kreisform des Innenquerschnitts des Kanals unterbricht und eine ebene oder konkave Innenfläche (6a) bildet.

3. Pumpengehäuse nach Anspruch 2, **dadurch gekennzeichnet, dass** die Innenfläche (6a) parallel zur seitlichen Flanschfläche (2) ist, an der der Elektromotor befestigbar ist.

4. Pumpengehäuse nach einem der vorherigen Ansprüche, **dadurch gekennzeichnet, dass** die Materialverdickung (6) im wesentlichen über die Länge des Kanals verläuft.

5. Pumpengehäuse nach einem der vorherigen Ansprüche, **dadurch gekennzeichnet, dass** die Materialverdickung (6) an der Stelle angeordnet ist, an der sich die Bindenaht zweier sich treffender Spritzgussfließfronten befindet.
